# EUROPÄISCHE PATENTSCHRIFT

(11) **EP 4 136 375 B1**
(45) Veröffentlichungstag und Bekanntmachung des Hinweises auf die Patenterteilung: **01.05.2024**
(21) Anmeldenummer: 21719885.2
(22) Anmeldetag: 15.04.2021
(51) Int. Cl.: F16L 3/227, F16L 3/10, F16L 3/24, H02G 3/32

(54) **ZUGENTLASTUNG**
STRAIN RELIEF CABLE CLAMP
SERRE-CÂBLE À LIBÉRATION DE CONTRAINTE

(30) Priorität: 17.04.2020 DE 202020102150 U
(43) Veröffentlichungstag der Anmeldung: 22.02.2023
(73) Patentinhaber: Igus GmbH, 51147 Köln (DE)
(72) Erfinder: KOCH, Christoph, 53225 Bonn (DE); KLEIN, Marcel, 53773 Hennef (DE); STEEGER, Ralf, 53797 Lohmar (DE); HERMEY, Andreas, 53773 Hennef (DE)
(74) Vertreter: Lippert Stachow Patentanwälte Rechtsanwälte
(86) Internationale Anmeldenummer: PCT/EP2021/059776
(87) Internationale Veröffentlichungsnummer: WO 2021/209546

(56) Entgegenhaltungen:
- DE-A1- 3 420 261
- GB-A- 307 210
- US-A- 2 375 513

## Beschreibung

Die Erfindung betrifft eine Zugentlastung für ein oder mehrere Kabel oder Schläuche gegen eine auf diese wirkende Zugkraft, umfassend eine Schelle mit einem Fuß und zwei sich vom Fuß aus in einer Höhenrichtung erstreckenden Schenkeln, ein im Bereich des Fußes oder in einem an diesen angrenzenden Bereich zwischen den Schenkeln angeordnetes oder anordenbares Auflager für ein Kabel oder einen Schlauch, ein zwischen den Schenkeln angeordnetes oder anordenbares Presslager zur Auflage auf ein Kabel oder einen Schlauch und ein mit dem Presslager verbundenes oder verbindbares, die durch die Presskraft auf das Kabel oder den Schlauch bewirkte Gegenkraft über die Verbindung aufnehmendes und in die Schenkel einleitendes Gegenlager, wobei die beiden Schenkel in ihrem vom Fuß weg weisenden Endbereich eine zwischen ihnen liegende Öffnung zum Einlegen eines oder mehrerer Kabel oder Schläuche zwischen die Schenkel gegen die Höhenrichtung in Richtung des Fußes aufweisen, wobei das Gegenlager seitliche Befestigungsmittel aufweist, die mit an den Schenkeln ausgebildeten Befestigungsmitteln derart in Eingriff bringbar sind, dass die Position des Gegenlagers in Höhenrichtung fixierbar ist, die Befestigungsmittel des Gegenlagers starr und relativ zu diesem unbeweglich angeordnet sind und durch Drehung des Gegenlagers um eine in Höhenrichtung verlaufende Achse oder durch Einschieben oder Verschieben des Gegenlagers relativ zu den Schenkeln in einer von der Höhenrichtung abweichenden Richtung mit den an den Schenkeln ausgebildeten Befestigungsmitteln zur Fixierung des Gegenlagers in Höhenrichtung in Eingriff bringbar sind, als Befestigungsmittel der Schenkel mehrere in Höhenrichtung der Schenkel im Abstand voneinander angeordnete Schlitze oder an den Innenseiten der Schenkel angeordnete Vertiefungen vorgesehen sind, so dass das Gegenlager in unterschiedlichen Höhenpositionen an den Schenkeln fixierbar ist, und eine an dem Presslager drehbar um eine in Höhenrichtung verlaufende Achse gelagerte oder lagerbare und sich vom Presslager in Höhenrichtung der Schenkel erstreckende Pressschraube mit Außengewinde vorgesehen ist, das mit einem im Gegenlager angeordneten Innengewinde zum kontinuierlichen Einstellen des Abstands zwischen dem Gegenlager und dem Presslager (8) zusammenwirkt.

Eine Zugentlastung der vorstehend genannten Art ist aus der DE 34 20 261 A1 bekannt. Das mit einem zwischen den Schenkeln der Schelle angeordnete Presslager verbundene Gegenlager, über das die Presskraft auf das Kabel in die Schenkel eingeleitet wird, weist mehrere in Höhenrichtung der Schenkel im Abstand voneinander angeordnete Zahnreihen als Befestigungsmittel auf, die mit zwischen Zahnreihen an den Innenseiten der Schenkel ausgebildeten Vertiefungen durch Einschieben des Gegenlagers zwischen die Schenkel derart in Eingriff bringbar sind, dass die Position des Gegenlagers in Höhenrichtung fixierbar ist. Über einen am Presslager drehbar gelagerten Gewindestift lässt sich der Abstand zwischen dem Gegenlager und dem Presslager zur Erzeugung der auf das Presslager wirkenden Spannkraft kontinuierlich einstellen.

Aus der GB 307 210 A ist eine Zugentlastung für ein oder mehrere Kabel oder Schläuche bekannt, die eine Schelle mit einem Fuß und zwei sich vom Fuß aus in einer Höhenrichtung erstreckende Schenkel, ein im Bereich des Fußes angeordnetes Auflager, ein zwischen den Schenkeln angeordnetes Presslager und ein mit dem Presslager verbundenes, die durch die Presskraft auf das Kabel oder den Schlauch bewirkte Gegenkraft über die Verbindung aufnehmendes und in die Schenkel einleitendes Gegenlager umfasst, wobei die beiden Schenkel in ihrem vom Fuß wegweisenden Endbereich eine zwischen ihnen liegende Öffnung zum Einlegen eines oder mehrerer Kabel oder Schläuche zwischen die Schenkel gegen die Höhenrichtung in Richtung des Fußes aufweisen, wobei das Gegenlager als Gewinde ausgebildete seitliche Befestigungsmittel aufweist, die mit an den Schenkeln als Gewinde ausgebildeten Befestigungsmitteln derart in Eingriff bringbar sind, dass die Position des Gegenlagers in Höhenrichtung fixierbar ist. Die Befestigungsmittel des Gegenlagers sind starr und relativ zu diesem unbeweglich angeordnet und durch Drehung des Gegenlagers um eine in Höhenrichtung verlaufende Achse mit den an den Schenkeln ausgebildeten Befestigungsmitteln zur Fixierung des Gegenlagers in Höhenrichtung in Eingriff bringbar.

Eine auch als Zugentlastung für ein Rohr oder Kabel anwendbare Rohr- und Kabelhalterung ist aus der US 2005/0006535 A1 bekannt. Bei dieser Halterung sind die Schenkel der Schelle als Zahnstangen mit an ihrer Außen- oder Innenseite angeordneten sich in Längsrichtung des Rohrs oder des Kabels erstreckenden Zähnen ausgebildet. Das Gegenlager weist in seitlichen Bereichen Schlitze auf, durch die sich die als Zahnstangen ausgebildeten Schenkel in Höhenrichtung hindurcherstrecken. In den seitlichen Bereichen sind Sperrklinken vorgesehen, die mit einem Zahn in die zwischen den Zähnen der Schenkel liegenden Vertiefungen einrasten und das Gegenlager gegen dessen Verschiebung längs der Schenkel in Höhenrichtung sichern. Die Sperrklinken können manuell so betätigt werden, dass ihre Zähne aus den jeweiligen Vertiefungen zwischen den Zähnen der Schenkel entfernbar sind, so dass das Gegenlager in Höhenrichtung längs der Schenkel verschoben und von diesen entfernt werden kann. Durch die dabei entstehende Öffnung zwischen den beiden Schenkeln kann das Kabel oder Rohr aus dem Zwischenraum zwischen den Schenkeln in Höhenrichtung entfernt bzw. gegen die Höhenrichtung zwischen die Schenkel eingeführt und auf dem Auflager angeordnet werden.

Die aus der US 2005/0006535 A1 bekannte Kabelhalterung ist konstruktionsbedingt, insbesondere aufgrund der in den seitlichen Bereichen des Gegenlagers angeordneten Sperrklinken, aufwendig. Außerdem sind die Sperrklinken verschleißanfällig. Weiterhin lässt sich die Höhenposition des Gegenlagers längs der Schenkel nur diskontinuierlich einstellen. Bei unterschiedlichen Kabel- oder Rohrdurchmessern lässt sich ein definierter und für eine Zugentlastung optimaler Pressdruck auf das zwischen dem Auflager und Gegenlager angeordnete Kabel oder Rohr kaum einstellen.

Aus der DE 20 2009 005 647 U1 ist eine Zugentlastung für ein oder mehrere Kabel oder Schläuche gegen eine auf diese wirkende Zugkraft bekannt, die eine U-förmige Bügelschelle mit zwei sich in einer Höhenrichtung erstreckenden parallelen Schenkeln umfasst. An den freien Enden der Schenkel ist jeweils ein Fuß angeordnet, der durch Kippen und anschließendes Aufrichten der Bügelschelle in einer C-Schiene arretierbar ist. In dem an die Füße angrenzenden Bereich ist zwischen den Schenkeln ein Auflager für ein Kabel oder einen Schlauch angeordnet. Weiterhin ist zwischen den Schenkeln der Bügelschelle ein Presslager zur Auflage auf ein Kabel oder einen Schlauch vorgesehen. Am Presslager ist eine drehbar um eine in Höhenrichtung verlaufende Achse gelagerte und sich vom Presslager in Höhenrichtung erstreckende Pressschraube mit einem Außengewinde vorgesehen, das mit einem im Kopfteil der Bügelschelle angeordneten Innengewinde zum Einstellen des Abstands zwischen dem Auflager und dem Presslager und somit des auf die Kabel oder Schläuche wirkenden Drucks zusammenwirkt.

Zur Montage der aus der DE 20 2009 005 647 U1 bekannten Zugentlastung an den Kabeln oder Schläuchen ist die Bügelschelle über den Kabeln oder Schläuchen anzuordnen, wobei das Auflager für die Kabel oder Schläuche auf der C-Profilschiene bereitgestellt oder seitlich zwischen den Schenkeln der auf der C-Profilschiene befestigten Schenkel der Bügelschelle unter ein zwischen den Schenkeln angeordnetes Kabel oder einen Schlauch eingeschoben werden muss. Bei zwei übereinander in Höhenrichtung angeordneten Schläuchen ist ein Zwischenlager ebenfalls entweder vor Befestigung der Bügelschelle auf der C-Profilschiene zwischen den Kabeln oder Schläuchen bereitzustellen oder nach Befestigung der Bügelschelle zwischen die Kabel oder Schläuche einzuschieben. Durch das Kippen und Aufrichten der Bügelschelle zwecks Befestigung an der C-Profilschiene ist bei Bereitstellung der Lager an den Kabeln oder Schläuchen die Montage der Zugentlastung nicht sehr leicht zu handhaben. Auch das Anordnen der Lager in der auf der C-Profilschiene befestigten Bügelschelle erfordert mehrere präzise Schritte.

Der Erfindung liegt die Aufgabe zugrunde, eine von der Konstruktion und Montage her einfache Zugentlastung bereitzustellen.

Außerdem soll die Zugentlastung ermöglichen, den Anpressdruck des Auflagers und des Gegenlagers an die Kabel oder Schläuche kontinuierlich und somit optimal einzustellen.

Die Aufgabe wird erfindungsgemäß bei einer Zugentlastung der eingangs genannten Art dadurch gelöst, dass das Gegenlager mindestens einen, vorzugsweise zwei diametral gegenüberliegende, in Bezug auf die Achse radial angeordnete Vorsprünge aufweist, die durch Drehung des Gegenlagers um die Achse in die Schlitze oder Vertiefungen einbringbar sind, und das Gegenlager drehbar um die Achse an einem unverdrehbar an den Schenkeln angeordneten oder anordenbaren, längs der Schenkel in Höhenrichtung verschiebbaren Teil gelagert ist, wobei die Pressschraube und das Gegenlager an der in Höhenrichtung weisenden Seite des Teils zwecks Drehung der Pressschraube und des Gegenlagers unabhängig voneinander zugänglich sind.

Aufgrund der erfindungsgemäßen Konstruktion der Zugentlastung lassen sich relativ zum Gegenlager bewegliche und somit auch verschleißanfällige Befestigungsmittel vermeiden, wobei eine einfache Montage der Kabel oder Schläuche sowie des Auflagers und Presslagers für dieselben durch ihre Einführung in die Schelle entgegen der Höhenrichtung der Schenkel der Schelle ermöglichen.

Die Schlitze können fensterartig in den Schenkeln ausgebildet oder an einer senkrecht zur Höhenrichtung und parallel zu den Schenkeln weisenden Stirnseite der Schenkel geöffnet sein. Die an den Innenseiten der Schenkel angeordneten Vertiefungen können zu den Stirnseiten der Schenkel geschlossen oder an einer oder an beiden Stirnseiten der Schenkel geöffnet sein.

Die Pressschraube kann mit einem Fuß in einer in Höhenrichtung der Schenkel weisenden Öffnung drehbar gelagert oder lagerbar sein, wobei der Fuß in der Öffnung gegen Bewegung der Pressschraube in Höhenrichtung gesichert ist.

Die an den Schenkeln ausgebildeten Schlitze oder Vertiefungen können längs der Schenkel senkrecht zu ihrer Höhenrichtung verlaufen.

Das unverdrehbar an den Schenkeln angeordnete oder anordenbare, längs der Schenkel in Höhenrichtung verschiebbare Teil kann als selbständiges Teil vom Presslager verschieden sein.

Mit Hilfe der Pressschraube lässt sich der Abstand zwischen dem Auflager und dem Gegenlager und somit der auf die Kabel oder Schläuche wirkende Pressdruck kontinuierlich und somit für eine Zugentlastung der Kabel oder Schläuche optimal einstellen.

Das längs der Schenkel in Höhenrichtung verschiebbare Teil kann an Seitenbereichen Schlitze aufweisen, durch die die Schenkel der Schelle hindurchführbar sind. Das Teil umgreift somit in seiner jeweiligen Höhenposition beide Schenkel und ist an diesen unverdrehbar angeordnet.

Das mindestens einen, vorzugsweise zwei diametral gegenüberliegende, in Bezug auf die Achse radial angeordnete Vorsprünge aufweisende Gegenlager kann an seiner in Höhenrichtung der Schenkel weisenden Seite eine Lagerbuchse aufweisen, die sich durch das längs der Schenkel in Höhenrichtung verschiebbare Teil erstreckt. Der Innendurchmesser der Lagerbuchse kann dabei so bemessen sein, dass sich die Pressschraube in bestimmten Höhenpositionen des Gegenlagers längs der Schenkel durch die Lagerbuchse und das längs der Schenkel in Höhenrichtung verschiebbare Teil erstreckt.

Die Lagerbuchse kann einen, bevorzugt zwei diametral gegenüberliegende, sich in Höhenrichtung erstreckende Schlitze zum Eingriff eines Werkzeugs zum Drehen des Gegenlagers aufweisen.

Weiterhin können an den sich gegenüberliegenden Seiten des Gegenlagers und des in Höhenrichtung verschiebbaren Teils Anschlagmittel vorgesehen sein, die in einer Eingriffsposition des oder der radialen Vorsprünge in gegenüberliegende Schlitze oder Vertiefungen an den Schenkeln ein Weiterdrehen des Gegenlagers aus der Eingriffsposition seiner radialen Vorsprünge in die Schlitze oder Vertiefungen verhindern.

Die Schenkel können plattenförmig mit ihren darin ausgebildeten Schlitzen oder Vertiefungen ausgebildet sein und in ihrem gegen die Höhenrichtung weisenden Endbereich in den Fuß übergehen.

Die Schenkel können jeweils einschließlich ihres Fußes bezüglich einer sich in Höhenrichtung in ihrer Mitte und parallel zum Schenkel erstreckenden Ebene spiegelsymmetrisch ausgebildet sein.

Der Fuß des jeweiligen Schenkels kann geometrisch an das Innenprofil einer zur Befestigung der Schelle dienenden C-Profilschiene mit einer verengten Öffnung angepasst sein, so dass die Schelle mit dem Fuß in die C-Profilschiene einschiebbar ist.

Alternativ kann der Fuß auch hakenförmig ausgebildet sein und mit seinem Hakenende in eine C-Profilschiene in gekippter Stellung der Schelle einführbar sein, so dass beim Aufschwenken der Schelle aus ihrer gekippten Stellung das Hakenende den Öffnungsrand der C-Profilschiene untergreift und die Schelle in ihrer aufgeschwenkten Stellung bei Zugbeanspruchung der darin befestigten Kabel oder Schläuche in einer in die Schwenkrichtung der Schelle weisenden Richtung sicher in der C-Profilschiene verankert ist.

Die im Folgenden beschriebenen alternativen Ausführungen einer Zugentlastung fallen nicht unter die durch die Ansprüche definierten Erfindung.

In einer alternativen Ausführung kann das Gegenlager seitliche Schlitze aufweisen, durch die die Schenkel in Höhenrichtung hindurchführbar sind, wobei die Schenkel gegenüberliegende Schlitze aufweisen, die an einer senkrecht zur Höhenrichtung und parallel zu den Schenkeln weisenden Stirnseite der Schenkel geöffnet sind, wobei die Weite der Schlitze in Höhenrichtung größer oder gleich der Höhenausdehnung des Gegenlagers in dessen sich von seinen Schlitzen zur Stirnseite hin erstreckenden Bereich ist und durch Verschiebung des Gegenlagers mit diesem Bereich in die gegenüberliegenden Schlitze der Schenkel das Gegenlager in der betreffenden Höhenposition an den Schenkeln arretierbar ist.

Das Gegenlager umgreift somit in seiner jeweiligen Höhenposition beide Schenkel und ist an diesen unverdrehbar angeordnet.

Die Öffnungen der Schlitze weisen bei Anwendung der Schelle als Zugentlastung gegen die Richtung der auf die Kabel oder Schläuche wirkenden Zugkraft.

Bei einer weiteren alternativen Ausführung ist das Gegenlager als Schraube mit einem Außengewinde ausgebildet, die drehbar um eine in Höhenrichtung verlaufende Achse auf dem Presslager gelagert oder lagerbar ist, wobei der Kerndurchmesser des Außengewindes kleiner als der Abstand zwischen den Innenseiten der Schenkel und der Außendurchmesser, d. h. das Nennmaß, des Außengewindes größer als der Abstand zwischen den Innenseiten der Schenkel sind und die Schenkel in Höhenrichtung in einem Abstand vom freien Ende der Schenkel und in diesem Abstand voneinander angeordnete Schlitze oder an ihrer Innenseite angeordnete Vertiefungen aufweisen, wobei der Abstand der Steigung des Außengewindes entspricht. Bei dieser Konstruktion kann die Schraube durch Drehung von den freien Enden der Schenkel her zwischen die Schenkel eingeführt werden, wobei ihr Außengewinde mit den Schlitzen oder Vertiefungen an den Innenseiten der Schenkel wie bei einem Schraubenlager zusammenwirkt. Auf diese Weise ist das Gegenlager kontinuierlich in unterschiedlichen Höhenpositionen längs der Schenkel verstellbar. Die Steigung des Außengewindes, die dem Abstand zwischen dem freien Ende der Schenkel und der Anordnung der Schlitze oder Vertiefungen und dem Abstand zwischen den Schlitzen oder Vertiefungen untereinander entspricht, kann derart gering gehalten werden, dass das Gegenlager in der jeweiligen Höhenposition längs der Schenkel in Höhenrichtung fixierbar ist.

Die Schlitze oder Vertiefungen an den Schenkeln können eine Neigung gegenüber einer senkrecht zur Höhenrichtung verlaufenden Ebene aufweisen, die dem Steigungswinkel des Außengewindes der Schraube entspricht.

Das Presslager kann in gegenüberliegenden Seitenbereichen in Höhenrichtung verlaufende Schlitze aufweisen, durch die sich bei Montage der Zugentlastung die Schenkel der Schelle erstrecken. Das Presslager umgreift somit in seiner jeweiligen Höhenposition beide Schenkel und ist an diesen unverdrehbar angeordnet.

Gemäß einer weiteren Ausbildung ist eine an dem Presslager drehbar um eine in Höhenrichtung verlaufende Achse gelagerte oder lagerbare und sich vom Presslager in Höhenrichtung erstreckende Pressschraube mit Außengewinde vorgesehen, das mit einem im Gegenlager angeordneten Innengewinde zum kontinuierlichen Einstellen des Abstands zwischen dem Gegenlager und dem Presslager zusammenwirkt, wobei an den Innenseiten der Schenkel Vertiefungen vorgesehen sind, die zu einer Stirnseite der Schenkel oder den beiden gegenüberliegenden Stirnseiten der Schenkel geöffnet sind und wobei das Gegenlager an seiner zu den Schenkeln hin weisenden Seiten Vorsprünge aufweist, die durch Einschieben des mit dem Presslager über die Pressschraube verbundenen Gegenlagers zwischen die Schenkel von der Stirnseite her, an der die Vertiefungen geöffnet sind, mit den gegenüberliegenden Vertiefungen der Schenkel in Eingriff bringbar sind.

Die gegenüberliegenden Vertiefungen können auch durch unterhalb, d. h. entgegen der Höhenrichtung, von Vorsprüngen an der Innenseite der Schenkel liegende Bereiche gebildet sein.

Bei einer Ausführung können die gegenüberliegenden zu den Schenkeln weisenden Vorsprünge des Gegenlagers in jeweils eine im Bereich des freien Endes der Schenkel angeordnete Vertiefung eingreifen. Dabei kann das Gegenlager sich mit einem Bereich über die freien Enden der Schenkel erstrecken.

Bei einer anderen Ausführung können mehrere im Abstand voneinander in Höhenrichtung und gegenüberliegend angeordnete Vertiefungen an den Innenseiten der Schenkel vorgesehen sein, so dass das mit dem Presslager über eine Pressschraube verbundene Gegenlager in entsprechenden unterschiedlichen Höhenpositionen von der Stirnseite der Schenkel her, an der die gegenüberliegenden Vertiefungen offen sind, zwischen die Schenkel der Schelle eingeschoben werden kann.

In einer Ausführung, bei der die Vertiefungen an beiden gegenüberliegenden Stirnseiten der Schenkel offen sind, weist das Presslager vorzugsweise ein in Anlage an eine der Stirnseiten bringbares Widerlager auf. Das Widerlager ist an der Stirnseite der Schenkel angeordnet, die bei Anwendung der Schelle als Zugentlastung gegen die Richtung der auf die Kabel oder Schläuche wirkenden Zugkraft weist.

Die Vertiefungen können geneigt zu den freien Enden der Schenkel hin an den gegenüberliegenden Innenseiten der Schenkel ausgebildet sein, so dass die zwischen dem freien Ende des jeweiligen Schenkels und der nächstbenachbarten Vertiefung und zwischen den zueinander benachbarten Vertiefungen gegen die Höhenrichtung geneigte Vorsprünge ausgebildet sind.

Die beiden Schenkel können im bodenseitigen Bereich des Fu-ßes einstückig miteinander in Gestalt einer starren U-Form verbunden sein.

In einer alternativen Ausführung können die Schenkel im Bereich des Fußes über ein separates Zwischenglied gegen Trennung voneinander senkrecht zu ihren Innenseiten verbunden sein.

Als Zwischenglied kann ein Gegenlager verwendet werden, wobei dessen seitliche Vorsprünge in entsprechend ausgebildete gegenüberliegende Vertiefungen in den Fußbereichen der Schenkel eingreifen.

Als Zwischenglied kann alternativ auch das zwischen den Schenkeln angeordnete oder anordenbare Auflager für ein unteres Kabel oder einen unteren Schlauch dienen, wobei die Schenkel im Bodenbereich ihres Fußes jeweils einen nach innen gerichteten und hakenförmig sich in Höhenrichtung erstreckenden Vorsprung aufweisen und das Auflager mit gegen die Höhenrichtung sich erstreckenden Beinen in die durch die hakenförmigen Vorsprünge gebildeten Ausnehmungen eingreifen.

Die Schenkel können sowohl an ihrer Innenseite als auch an ihrer Außenseite Vertiefungen der vorstehend beschriebenen Art aufweisen. Sie können spiegelsymmetrisch bezüglich einer parallel zu ihnen und in der Mitte zwischen ihnen verlaufenden Ebene ausgebildet sein.

Weisen die Schenkel sowohl an ihren Innen- als auch an ihren Außenseiten Vertiefungen der vorstehend beschriebenen Art auf, können mehr als zwei Schenkel seitlich nebeneinander angeordnet und durch Gegenlager der vorstehend beschriebenen Art starr gegen seitliche Trennung voneinander miteinander verbunden sein. Zwischen den Schenkeln können Kabel oder Schläuche angeordnet sein, die durch vorstehend beschriebene Zugentlastungen zwischen den Schenkeln gehalten werden.

Ein Ausführungsbeispiel der Erfindung wird im Folgenden anhand der Figuren 1 bis 6 näher beschrieben. Es zeigen:
- Figur 1: eine Explosionsdarstellung eines ersten Ausführungsbeispiels,
- Figur 2: eine Darstellung des Ausführungsbeispiels in einem Zwischenstadium der Montage,
- Figur 3: eine Darstellung des Ausführungsbeispiels im fertig montierten Zustand,
- Figur 4: eine seitliche Ansicht des Ausführungsbeispiels im fertig montierten Zustand,
- Figur 5: eine stirnseitige Ansicht des Ausführungsbeispiels im fertig montierten Zustand,
- Figur 6: eine Ansicht des Ausführungsbeispiels mit einem Kabel oder Schlauch im fertig montierten Zustand.

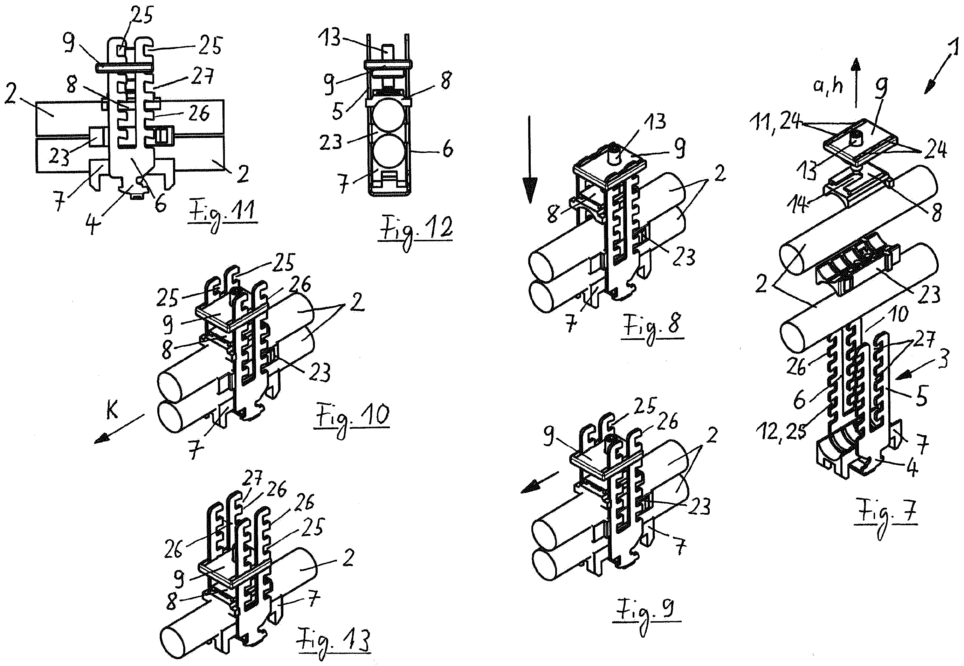

Die folgenden Figuren 7 bis 42 zeigen alternative Ausführungen einer Zugentlastung, die nicht unter die die vorliegende Erfindung definierenden Ansprüche fallen. Es zeigen:
- Figur 7: eine Explosionsdarstellung einer alternativen Ausführung,
- Figur 8: eine Darstellung der Ausführung in einem ersten Zwischenstadium der Montage,
- Figur 9: eine Darstellung der Ausführung in einem zweiten Zwischenstadium der Montage,
- Figur 10: eine Darstellung der Ausführung im fertig montierten Zustand,
- Figur 11: eine seitliche Darstellung der Ausführung im fertig montierten Zustand,
- Figur 12: eine stirnseitige Ansicht der Ausführung im fertig montierten Zustand,
- Figur 13: eine Ansicht der Ausführung für ein Kabel oder einen Schlauch im fertig montierten Zustand,

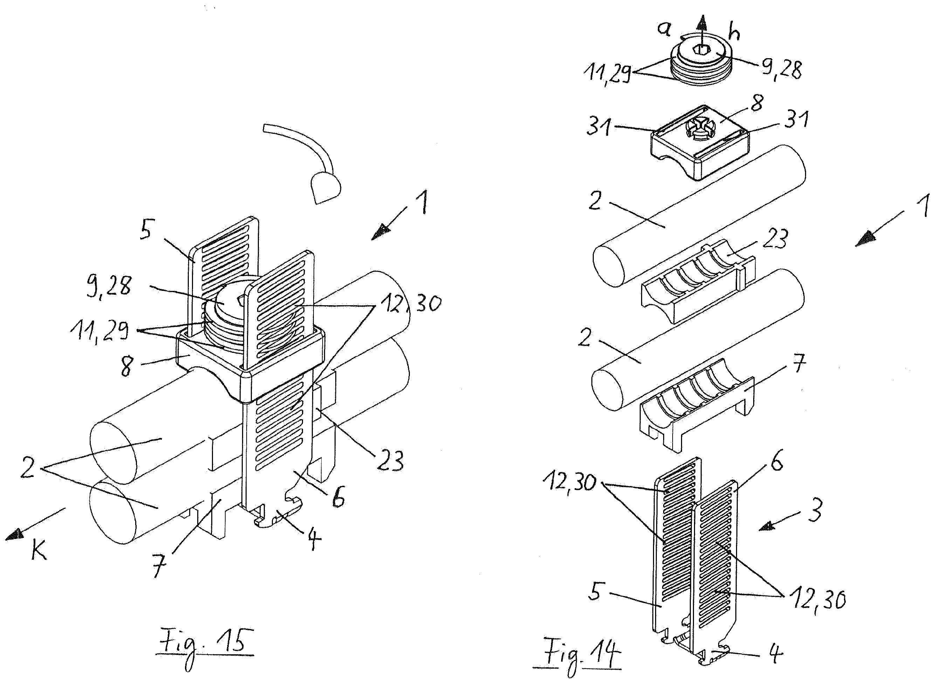

- Figur 14: eine Explosionsdarstellung einer weiteren Ausführung,
- Figur 15: eine Darstellung der Ausführung im montierten Zustand,

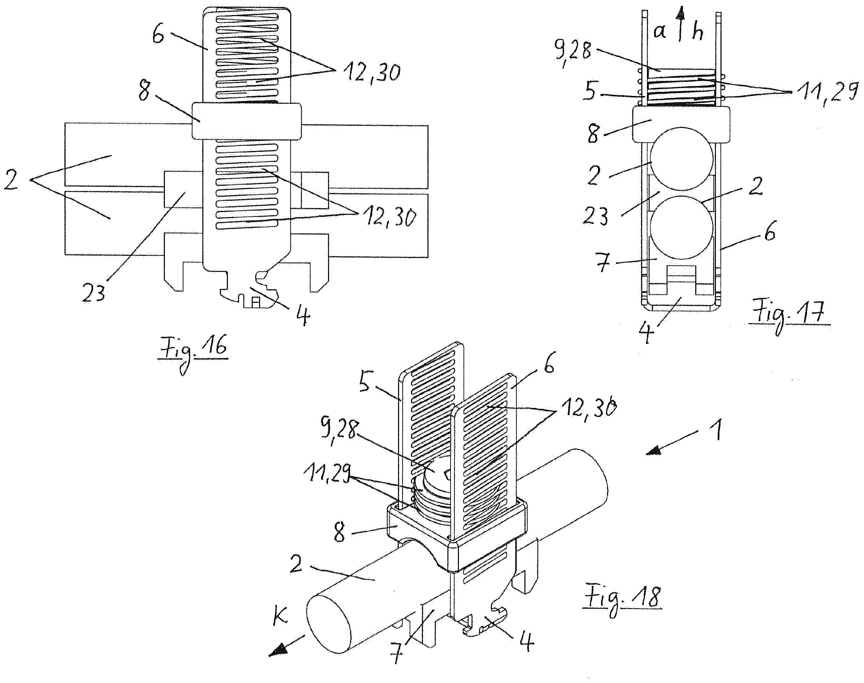

- Figur 16: eine seitliche Ansicht der Ausführung im montierten Zustand,
- Figur 17: eine stirnseitige Ansicht der Ausführung im montierten Zustand,
- Figur 18: eine Ansicht der Ausführung für ein Kabel oder einen Schlauch im montierten Zustand,

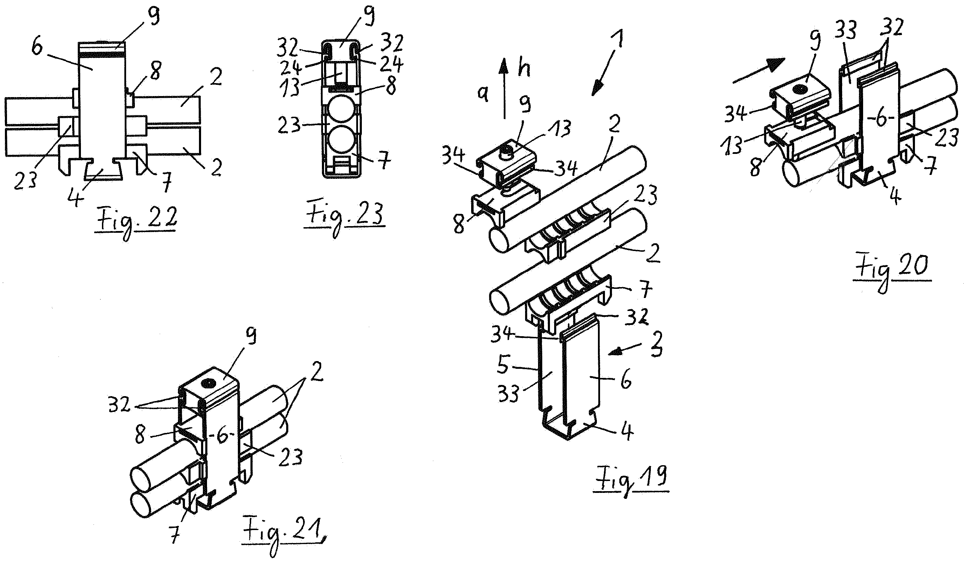

- Figur 19: eine Explosionsdarstellung einer weiteren Ausführung,
- Figur 20: eine Darstellung der Ausführung in einem Zwischenstadium der Montage,
- Figur 21: eine Darstellung der Ausführung im fertig montierten Zustand,
- Figur 22: eine seitliche Ansicht der Ausführung,
- Figur 23: eine stirnseitige Ansicht der Ausführung,

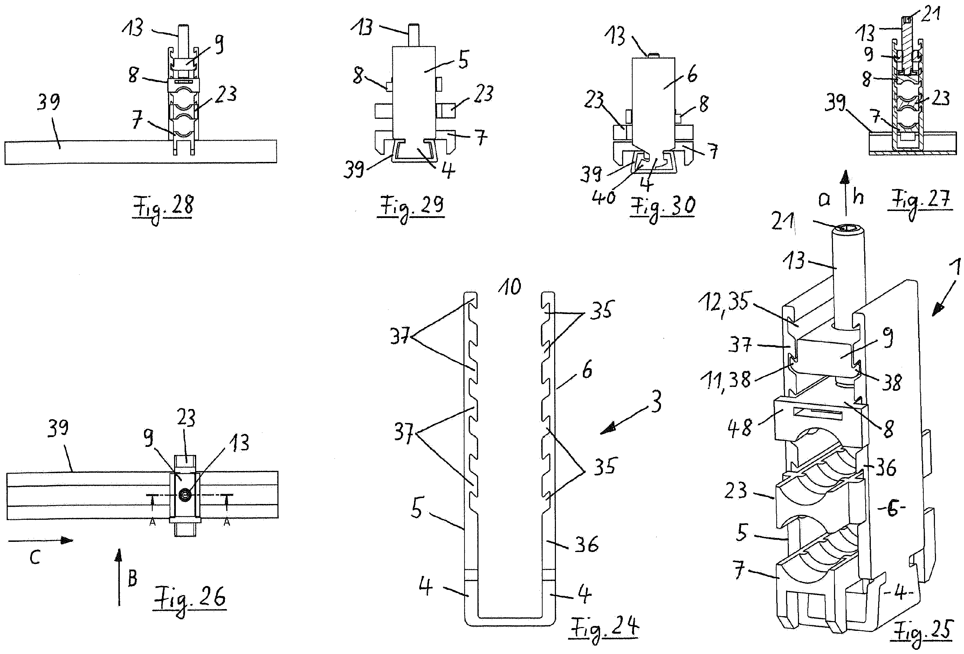

- Figur 24: eine stirnseitige Ansicht einer Schelle einer weiteren Ausführung,
- Figur 25: eine perspektivische Ansicht der Ausführung nach Montage,
- Figur 26: eine Draufsicht auf die auf einer C-Profilschiene montierte Ausführung,
- Figur 27: eine Schnittdarstellung längs der Ebene A-A in Figur 26,
- Figur 28: eine seitliche Ansicht der auf einer C-Profilschiene montierten Ausführung in Richtung des Pfeils B in Figur 26,
- Figur 29: eine stirnseitige Ansicht der auf einer C-Profilschiene montierten Ausführung in Richtung des Pfeils C in Figur 26,
- Figur 30: eine stirnseitige Ansicht der auf einer C-Profilschiene montierten Ausführung in Richtung des Pfeils D in Figur 26 mit tiefgesetzten Lagern und einer alternativen Ausführung des Fußes,

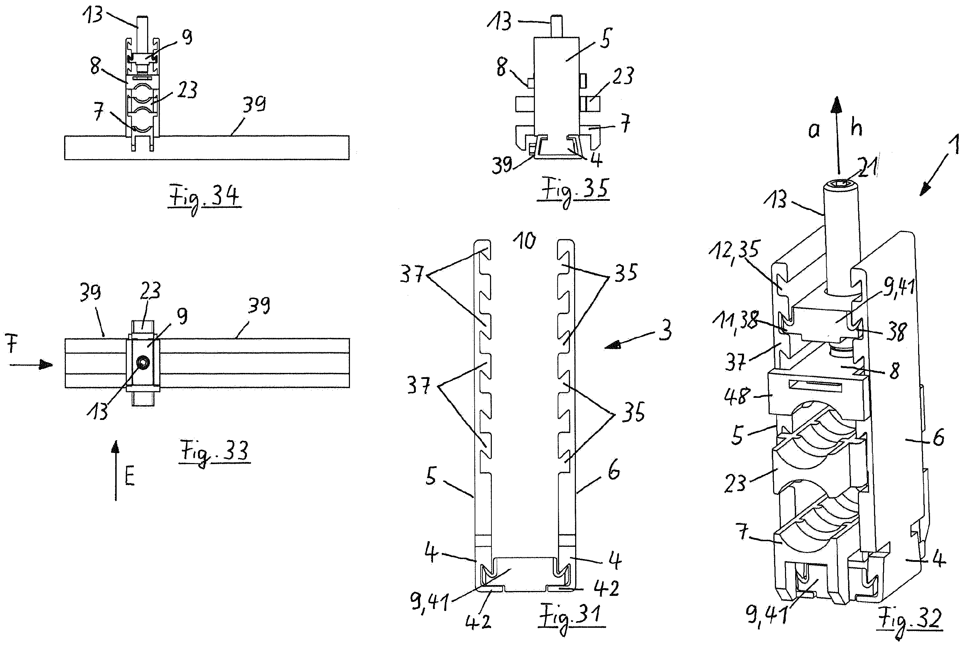

- Figur 31: eine stirnseitige Ansicht einer Schelle einer weiteren Ausführung,
- Figur 32: eine perspektivische Ansicht der Ausführung nach Montage,
- Figur 33: eine Draufsicht auf die auf einer C-Profilschiene montierte Ausführung,
- Figur 34: eine seitliche Ansicht der auf einer C-Profilschiene montierten Ausführung in Richtung des Pfeils E in Figur 33,
- Figur 35: eine stirnseitige Ansicht der auf einer C-Profilschiene montierten Ausführung in Richtung des Pfeils F in Figur 33,

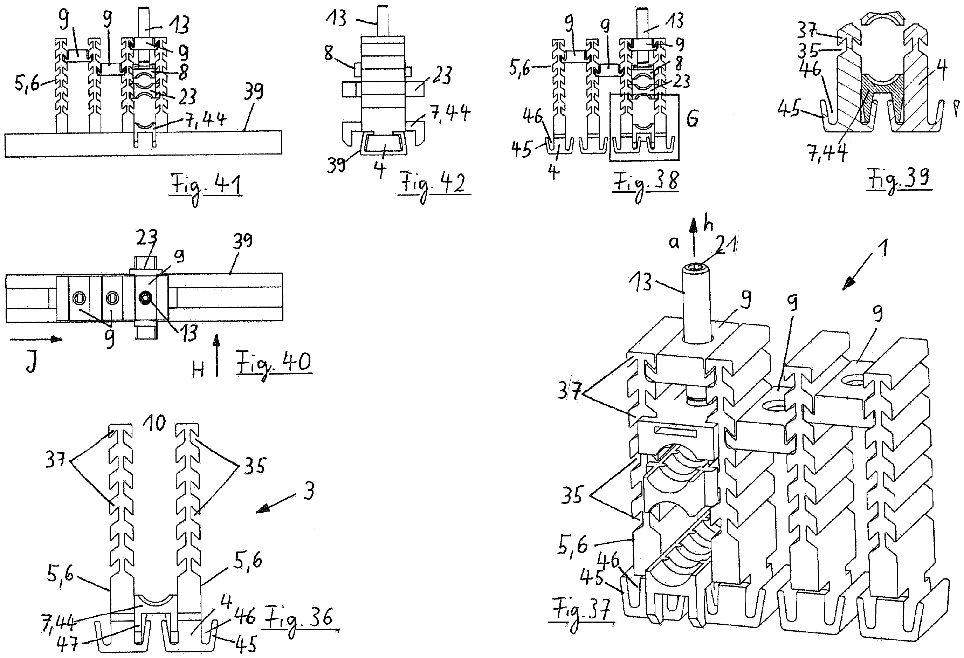

- Figur 36: eine stirnseitige Ansicht einer Schelle einer weiteren Ausführung,
- Figur 37: eine perspektivische Ansicht der Ausführung nach Montage mit zwei seitlich, modulartig angefügten und mit Gegenlagern verbundenen Schenkeln,
- Figur 38: eine stirnseitige Ansicht der Anordnung gemäß Figur 38,
- Figur 39: einen Ausschnitt des mit G markierten Gebiets in Figur 38,
- Figur 40: eine Draufsicht auf die auf einer C-Profilschiene montierte Anordnung gemäß Figur 37,
- Figur 41: eine seitliche Ansicht der auf einer C-Profilschiene montierten Anordnung in Richtung des Pfeils H in Figur 40, und
- Figur 42: eine stirnseitige Ansicht der auf einer C-Profilschiene montierten Anordnung in Richtung des Pfeils J in Figur 40.

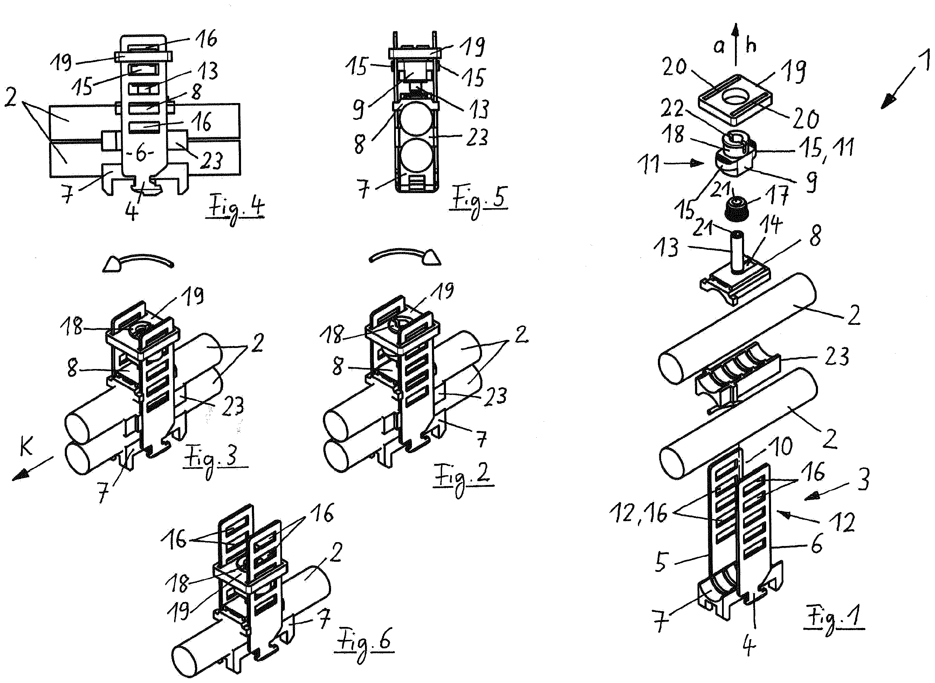

Wie aus den das Ausführungsbeispiel der vorliegenden Erfindung zeigenden Figuren 1 bis 6, hervorgeht, weist die Zugentlastung 1 für ein oder mehrere Kabel 2 oder Schläuche gegen eine auf diese in Längsrichtung wirkende Zugkraft **K** eine Schelle 3 mit einem Fuß 4 und zwei sich vom Fuß aus in einer Höhenrichtung **h** erstreckende Schenkel 5, 6 auf. Im Bereich des Fußes 4 oder in einem an diesen angrenzenden Bereich zwischen den Schenkeln 5, 6 ist ein Auflager 7 für ein Kabel 2 oder einen Schlauch anordenbar. Weiterhin ist zwischen den Schenkeln 5, 6 ein Presslager 8 zur Auflage gegen die Höhenrichtung **h** auf ein Kabel 2 oder einen Schlauch anordenbar. Mit dem Presslager 8 verbindbar ist ein die durch die Presskraft des Presslagers 8 auf das Kabel 2 oder den Schlauch bewirkte Gegenkraft aufnehmendes und in die Schenkel 5, 6 einleitendes Gegenlager 9. Zwischen den beiden Schenkeln 5, 6 ist in ihrem vom Fuß 4 weg weisenden, freien Endbereich eine Öffnung 10 zum Einlegen eines oder mehrerer Kabel 2 oder Schläuche gegen die Höhenrichtung **h** zwischen den Schenkeln 5, 6 vorgesehen. Das Gegenlager 9 weist seitliche Befestigungsmittel 11 auf, die mit an den Schenkeln 5, 6 ausgebildeten Befestigungsmitteln 12 derart in Eingriff bringbar sind, dass das Gegenlagers 9 in einer bestimmten Höhenposition zumindest gegen eine Bewegung in Höhenrichtung h fixierbar ist.

Wie aus der Zeichnung weiterhin hervorgeht, sind die Befestigungsmittel 11 am Gegenlager 9 starr und relativ zu diesem unbeweglich angeordnet. Bei dem in den Figuren 1-6 dargestellten Ausführungsbeispiel sind die Befestigungsmittel 11 durch Drehung des Gegenlagers 9 um eine in Höhenrichtung **h** verlaufende Achse a mit den an den Schenkeln 5, 6 ausgebildeten Befestigungsmitteln 12 zur Fixierung des Gegenlagers 9 in einer bestimmten Höhenposition in Eingriff bringbar.

Bei dem in den Figuren 1-6 dargestellten Ausführungsbeispiel sind die Befestigungsmittel 12 der Schenkel 5, 6 als Schlitze ausgebildet. An jedem Schenkel 5, 6 sind mehrere in Höhenrichtung **h** der Schenkel 5, 6 im Abstand voneinander angeordnete Schlitze bzw. Vertiefungen vorgesehen, so dass das Gegenlager 9 in unterschiedlichen Höhenpositionen an den Schenkeln 5, 6 fixierbar ist.

Gemäß den Figuren 1-6 ist eine an dem Presslager 8 drehbar um eine in Höhenrichtung **h** verlaufende Achse a gelagerte und sich vom Presslager 8 in Höhenrichtung **h** der Schenkel 5, 6 erstreckende Pressschraube 13 mit einem Außengewinde vorgesehen, das mit einem im Gegenlager 9 angeordneten Innengewinde zum kontinuierlichen Einstellen des Abstands zwischen dem Gegenlager 9 und dem Presslager 8 zusammenwirkt. Die Pressschraube 13 ist mit einem Fuß in einer in Höhenrichtung **h** der Schenkel 5, 6 weisenden Öffnung 14 drehbar gelagert, wobei der Fuß in der Öffnung 14 gegen Bewegung der Pressschraube 13 in Höhenrichtung h gesichert ist.

Das Gegenlager 9 weist zwei diametral gegenüberliegende, in Bezug auf die Achse a der Pressschraube 13 radial angeordnete Vorsprünge 15 auf, die durch Drehung des Gegenlagers 9 um die Achse a in senkrecht zur Höhenrichtung **h** verlaufende, gegenüberliegende Schlitze 16 der beiden Schenkel 5, 6 eingreifbar sind. An der gegen die Höhenrichtung **h** weisenden Seite des Gegenlagers 9 ist eine in der Zeichnung nicht dargestellten Öffnung vorgesehen, in die ein Teil 17 mit einem Innengewinde einpressbar ist, das mit dem Außengewinde der Pressschraube 13 zusammenwirkt.

Das zwei diametral gegenüberliegende und in Bezug auf die Achse a radial angeordnete Vorsprünge 15 aufweisende Gegenlager 9 ist an seiner in Höhenrichtung **h** der Schenkel 5, 6 weisenden Seite mit einer Lagerbuchse 18 versehen, die sich durch ein längs der Schenkel 5, 6 in Höhenrichtung h verschiebbares Teil 19 erstreckt und in diesem drehbar um die Achse a gelagert ist. Das Teil 19 weist in gegenüberliegenden Seitenbereichen Schlitze 20 auf, durch die die Schenkel 5, 6 der Schelle 3 hindurchführbar sind, so dass das Teil 19 längs der Schenkel 5, 6 in Höhenrichtung **h** verschiebbar gelagert ist. Das Teil 19 umgreift somit in seiner durch das Gegenlager 9 jeweils definierten Höhenposition beide Schenkel 5, 6 und ist an diesen unverdrehbar angeordnet. Der Innendurchmesser der Lagerbuchse 18 ist so bemessen, dass sich die Pressschraube 13 in bestimmten Höhenpositionen des Gegenlagers 9 drehbar durch die Lagerbuchse 18 und somit durch das Teil 19 hindurcherstrecken kann.

Die Pressschraube 13 weist in ihrem in Höhenrichtung h weisenden Endbereich eine Eingriffsöffnung 21 zum Einsetzen eines (in der Zeichnung nicht dargestellten) Werkzeugs zur Betätigung der Pressschraube 13 auf. Die Lagerbuchse 18 weist zwei diametral gegenüberliegende, sich in Höhenrichtung **h** erstreckende Schlitze 22 zum Eingriff eines (in der Zeichnung nicht dargestellten) Werkzeugs zum Drehen des Gegenlagers 9 auf.

Durch das an den Schenkeln in und gegen die Höhenrichtung **h** verschiebbar und unverdrehbar gelagerte Teil 19 wird die Achse a der Pressschraube 13 und des Gegenlagers 9 in ihrer Richtung stabilisiert.

Wie aus Figur 2 hervorgeht, können das Auflager 7, zwei übereinander angeordnete Kabel 2 oder Schläuche mit einem Zwischenlager 23, und das Presslager 8 zusammen mit der Pressschraube 13, dem auf ihr aufgeschraubten Gegenlager 9 und dem Teil 19 durch die Öffnung 10 an den freien Enden der Schenkel 5, 6 zwischen diese entgegen der Höhenrichtung **h** eingeführt werden, um den in Figur 2 dargestellten Montageschritt zu ergeben. Bei diesem Montageschritt befindet sich, wie auch in Figur 1 gezeigt, das Gegenlager 9 in einer Drehposition, in der seine radialen Vorsprünge 15 nicht in die Schlitze 16 der Schenkel 5, 6 eingreifen.

Durch Drehung des Gegenlagers (mit einem Werkzeug) in der durch den Pfeil über der Figur 2 angegebenen Richtung greifen die Vorsprünge 15 in gegenüberliegende Schlitze 16 der Schenkel 5, 6 in einer bestimmten Höhenposition ein, wie in den Figuren 3-5 gezeigt. Anschließend wird die Pressschraube 13 (ebenfalls mit einem Werkzeug) im Innengewinde des Gegenlagers 9 derart gedreht, dass die beiden Kabel 2 oder Schläuche mit einem geeigneten Pressdruck zwischen dem Auflager 7, dem Zwischenlager 23 und dem Presslager 8 gehalten werden.

Durch Drehung des Gegenlagers 9 in die über der Figur 3 mit einem Pfeil angedeuteten Richtung, also in Gegenrichtung zu dem über der Figur 2 gezeigten Pfeil, können die Vorsprünge 15 aus ihrem Eingriff in die Schlitze 16 der Schenkel 5, 6 wieder herausgedreht werden, so dass die verschiedenen Komponenten, wie in der Explosionsdarstellung der Figur 1 gezeigt, zwischen den Schenkeln 4, 5 in Höhenrichtung h wieder entfernt werden können.

Die Montage mit einem Kabel 2 oder Schlauch erfolgt ohne das Zwischenlager 23 wie in Figur 6 gezeigt.

Bei der in den Figuren 7-13 dargestellten alternativen Ausführung weist das Gegenlager 9 seitliche Schlitze 24 auf, durch die die Schenkel 5, 6 in Höhenrichtung **h** hindurchführbar sind, wie in Figur 8 gezeigt. An jeder Seite der Schelle (3) sind zwei zueinander fluchtend angeordnete Schenkel angeordnet. Die Schenkel 4, 5 weisen gegenüberliegende Schlitze 25 in mehreren Höhenpositionen auf, die an einer Stirnseite 26 der Schenkel 5, 6 geöffnet sind, wobei die Weite der Schlitze 25 in Höhenrichtung **h** minimal größer als die Höhenausdehnung des Gegenlagers 9 in dessen sich von seinen Schlitzen zur Stirnseite 26 erstreckenden Bereich. Durch Verschiebung des Gegenlagers 9 mit diesem Bereich in die gegenüberliegenden Schlitze 25 der Schenkel 5, 6 kann das Gegenlager 9 in der betreffenden Höhenposition an den Schenkeln 5, 6 arretiert werden, wie in Figur 9 gezeigt.

Die Öffnungen 27 der Schlitze 25 in den Schenkeln 5, 6 weisen bei Anwendung der Schelle 3 als Zugentlastung gegen die Richtung der auf die Kabel 2 oder Schläuche wirkenden Zugkraft **K.**

Ansonsten weist die Ausführung ein Auflager 7, ein Zwischenlager 23 und ein Presslager 8 mit einer Pressschraube 13 wie bei dem zuvor beschriebenen Ausführungsbeispiel auf, wobei das Außengewinde der Pressschraube 13 mit einem im Gegenlager 9 vorgesehenen Innengewinde zusammenwirkt. Die Montage der Zugentlastung erfolgt, wie in Figur 8 gezeigt, in einem ersten Schritt ebenso wie in dem zuvor beschriebenen Ausführungsbeispiel durch Einsetzen der genannten Komponenten durch die Öffnung 10 in den Innenraum zwischen den Schenkeln 5,6. Der fertige Montagezustand ist in den Figuren 10-12 dargestellt.

Zur Zugentlastung eines Kabels 2 oder eines Schlauchs erfolgt die Montage, hier ohne das Zwischenlager 23, wie vorstehend für die beiden Kabel 2 oder Schläuche beschrieben, wobei der fertige Montagezustand in Figur 13 dargestellt ist.

Bei der in den Figuren 14-18 dargestellten alternativen Ausführung ist das Gegenlager 9 als Schraube 28 mit einem Außengewinde 29 ausgebildet, die drehbar um eine in Höhenrichtung h verlaufende Achse a auf dem Presslager 8 lagerbar ist. Der Kerndurchmesser des Außengewindes 29 ist kleiner als der Abstand zwischen den Innenseiten der Schenkel 5, 6 und der Außendurchmesser, d. h. das Nennmaß, des Außengewindes 29 ist größer als der Abstand zwischen den Innenseiten der Schenkel 5, 6. Die Schenkel 5, 6 weisen in einem Abstand von ihrem freien Ende gegen Höhenrichtung **h** und in diesem Abstand voneinander getrennte Schlitze 30 auf, wobei dieser Abstand der Steigung des Außengewindes 29 entspricht.

Das Presslager 8 weist in gegenüberliegenden Seitenbereichen in Höhenrichtung **h** verlaufende Schlitze 31 auf, durch die sich bei Montage der Zugentlastung die Schenkel 5, 6 der Schelle 3 erstrecken.

Durch Drehung der Schraube 28 von den freien Enden der Schenkel 5, 6 her kann die Schraube 28 zwischen die Schenkel 5, 6 entgegen der Höhenrichtung **h** eingedreht und entgegen der Höhenrichtung **h** durch weitere Drehung, wie durch den Pfeil über der Figur 15 angegeben, zwischen den Schenkeln 4, 5 abgesenkt werden, wobei ihr Außengewinde 29 wie bei einem Schraubenlager mit den Schlitzen 30 der Schenkel 5, 6 zusammenwirkt. Auf diese Weise ist das als Schraube 28 ausgebildete Gegenlager 9 kontinuierlich in unterschiedlichen Höhenpositionen längs der Schenkel 5,6 verstellbar, um somit einen geeigneten Anpressdruck des oder der Kabel 2 oder Schläuche zwischen dem Auflager 7, gegebenenfalls dem Zwischenlager 23 und dem Presslager 8 zu bewirken. Die Schlitze 30 in den Schenkeln 5,6 weisen vorzugsweise eine Neigung gegenüber einer senkrecht zur Höhenrichtung **h** verlaufenden Ebene auf, die dem Steigungswinkel des Außengewindes 29 der Schraube 28 entspricht. Die Steigung ist hinreichend gering gehalten, so dass das Gegenlager 9 in der jeweiligen Höhenposition längs der Schenkel 5, 6 in Höhenrichtung **h** sicher fixierbar ist.

Die Montage dieser alternativen Ausführung erfolgt ebenso wie beim ersten Ausführungsbeispiel gemäß der Explosionsdarstellung in Figur 14 durch die Öffnung 10 zwischen den freien Enden der Schenkel 5, 6 hindurch in eine Position zwischen den Schenkeln 5,6, wie in den Figuren 15-17 gezeigt.

Wird die Zugentlastung nur für ein Kabel 2 oder einen Schlauch benötigt, erfolgt die Montage wie zuvor beschrieben ohne das Zwischenlager 23, wobei der fertige Montagezustand in Figur 18 gezeigt ist.

Bei der in den Figuren 19-23 gezeigten weiteren Ausführung weisen die beiden Schenkel 5, 6 in ihren freien Endbereichen jeweils eine nach innen, d. h. in ihren Zwischenraum, gerichtete Auskragung 32 auf. In die unter den Auskragungen 32 liegenden Vertiefungen 33 an den Innenseiten der Schenkel 5,6 können beim stirnseitigen Einschieben des Gegenlagers 9 seitliche Vorsprünge 34 desselben zwischen die Schenkel 5, 6 eingreifen, wie in Figur 20 längs des dort eingezeichneten Pfeils angedeutet ist. Durch die nach innen weisenden Auskragungen 32 der Schenkel 5, 6 und die in die darunter liegenden Vertiefungen eingreifenden Vorsprünge 33 des Gegenlagers 9 wird dieses an einem Heraustreten in Höhenrichtung **h** zwischen den beiden freien Endbereichen der Schenkel 5, 6 gehindert.

Wie insbesondere aus Figur 23 hervorgeht, kann das Gegenlager 9 an beiden Seiten die nach innen gerichteten Auskragungen 32 der Schenkel 5, 6 überkragen, so dass die Auskragungen 32 als Führungsschienen beim Einschieben des Gegenlagers 9 in Richtung des in Figur 20 dargestellten Pfeils zwischen die freien Endbereiche der Schenkel 5, 6 wirken.

Wie ebenfalls aus Figur 20 hervorgeht, wird das Gegenlager 9 zusammen mit dem Presslager 8 und der Pressschraube 13 zwischen die Schenkel 5, 6 zur Montage der Zugentlastung eingeschoben, wobei das Gegenlager 9 ein Innengewinde aufweist, das mit dem Außengewinde der Pressschraube 13 zusammenwirkt.

In der zwischen die Schenkel 5, 6 eingeschobenen Position wird zur Endmontage der Zugentlastung, wie sie in den Figuren 21-23 gezeigt ist, die Pressschraube 13 derart gedreht, dass ein geeigneter Pressdruck auf die Kabel 2 oder Schläuche zwischen dem Auflager 7 und dem Presslager 8, gegebenenfalls einem zwischen den Kabeln 2 oder den Schläuchen gelagerten Zwischenlager 23 ausgeübt wird.

Bei der in den Figuren 24-30 dargestellten weiteren Ausführung sind mehrere im Abstand voneinander in Höhenrichtung **h** und gegenüberliegend angeordnete Vertiefungen 35 an den Innenseiten der Schenkel 5, 6 vorgesehen, so dass das mit dem Presslager 8 über eine Pressschraube 13 verbundene Gegenlager 9 in entsprechenden unterschiedlichen Höhenpositionen von der Stirnseite 35 der Schenkel 5, 6 her zwischen die Schenkel 5, 6 der Schelle 3 eingeschoben werden kann. Die Vertiefungen 35 können an beiden gegenüberliegenden Stirnseiten der Schenkel 5, 6 offen sein.

Wie aus Figur 24 hervorgeht, sind die Vertiefungen 35 mit ihren Öffnungen zur Innenseite der Schenkel 5, 6 gegen die Höhenrichtung **h** geneigt ausgebildet, so dass die zwischen dem freien Ende des jeweiligen Schenkels 5, 6 und der nächstbenachbarten Vertiefung 35 und die zwischen den zueinander benachbarten Vertiefungen 35 ausgebildeten Vorsprünge 37 ebenfalls gegen die Höhenrichtung **h** und zum Innenraum zwischen den Schenkeln 5, 6 geneigt sind.

Die beiden Schenkel 5, 6 sind im bodenseitigen Bereich des Fußes 4 einstückig miteinander verbunden, so dass die Schelle 3 in Gestalt einer starren U-Form ausgebildet ist.

Das Gegenlager 9 weist, wie insbesondere in Figur 25 gezeigt ist, in seinem unteren Bereich hakenförmige Vorsprünge 38 auf, deren Hakenenden sich in Höhenrichtung **h** in die Vertiefungen 35 derart hineinerstrecken, dass das Gegenlager 9 von der Stirnseite 36 her zwischen die Schenkel 5, 6 einschiebbar ist und durch das hakenförmige Ineinandergreifen der Vorsprünge 38 des Gegenlagers 9 und der Vorsprünge 37 der Schenkel 5, 6 gegen seine Bewegung in Höhenrichtung **h** besonders wirksam gesichert ist.

Am Presslager 8 ist, wie bei den vorstehend beschriebenen Ausführungen, eine sich in Höhenrichtung **h** erstreckende Pressschraube 13 drehbar gelagert, deren Außengewinde mit einem im Gegenlager 9 ausgebildetes Innengewinde zusammenwirkt, so dass der Abstands zwischen dem Gegenlager 9 und dem Presslager 8 durch Drehen der Pressschraube 13 in die eine oder andere Richtung zum Einstellen des Pressdruckes kontinuierlich verändert werden kann.

Der Fuß 4 des jeweiligen Schenkels 5, 6 ist geometrisch an das Innenprofil einer zur Befestigung der Schelle 3 dienenden C-Profilschiene 39 mit einer verengten Öffnung, wie in den Figuren 26-30 dargestellt, angepasst, so dass die Schelle 3 mit dem Fuß 4 in die C-Profilschiene 39 einschiebbar ist.

Alternativ kann der Fuß 4, wie in Figur 30 gezeigt, auch hakenförmig ausgebildet sein und mit seinem Hakenende 40 in eine C-Profilschiene 39 in gekippter Stellung der Schelle 3 eingeführt werden. Aus der gekippten Stellung kann die Schelle 3 durch Aufschwenken in ihre in Figur 30 dargestellte aufrechte Position gebracht werden, wobei das Hakenende 40 einen im Bereich des Öffnungsrandes der C-Profilschiene 39 nach unten weisenden Vorsprung untergreift, so dass die Schelle 3 bei Zugbeanspruchung der darin befestigten Kabel 2 oder Schläuche in einer in die Schwenkrichtung beim Aufrichten der Schelle 3 weisenden Richtung sicher in der C-Profilschiene verankert ist.

Bei der in den Figuren 31-35 gezeigten weiteren Ausführung unterscheidet sich die Zugentlastung von dem vorstehend beschriebenen fünften Ausführungsbeispiel lediglich dadurch, dass die Schenkel 5, 6 der Schelle 3 im Bereich des Fußes 4 über ein separates Zwischenglied 41 gegen Trennung voneinander senkrecht zu ihren Innenseiten verbunden sind. Das Zwischenglied 41 ist so ausgebildet, dass es, wie in den Figuren 31 und 32 gezeigt, als Gegenlager verwendet werden kann. Da die Füße 4 der Schenkel 5, 6 in ihrem Bodenbereich senkrecht nach innen abgewinkelt sind und das Zwischenglied 41 auf den abgewinkelten Bereichen 42 flach aufliegt, sind die in den Schenkeln 5, 6 ausgebildeten Vertiefungen 43 entsprechend mit einem senkrecht zur Höhenrichtung **h** verlaufenden Bodenbereich, im Unterschied zu den Vertiefungen 35 des vorstehend beschriebenen fünften Ausführungsbeispiels, versehen.

Im Übrigen ist die Ausführung, wie aus den Figuren 31-35 hervorgeht, analog zu der vorstehend beschriebenen Ausführung gebildet.

Bei der in den Figuren 36-42 dargestellten alternativen Ausführung sind sowohl an den Innenseiten der Schenkel 5, 6 als auch an ihren Außenseiten Vertiefungen 35 in der für das vorstehend beschriebene fünfte Ausführungsbeispiel beschriebenen Art ausgebildet. Wie insbesondere aus Figur 36 hervorgeht, sind die Schenkel 5, 6 spiegelsymmetrisch bezüglich einer parallel zu ihnen und in der Mitte zwischen ihnen verlaufenden Ebene ausgebildet. Diese Gestaltung der Schenkel 5, 6 ermöglicht es, mehr als zwei Schenkel 5, 6 modulartig seitlich nebeneinander anzuordnen und durch Gegenlager der für die Ausführung nach den Figuren 24-30 beschriebenen und dargestellten Art starr gegen seitliche Trennung voneinander miteinander zu verbinden, wie in Figur 37 gezeigt ist. Zwischen den Schenkeln 5, 7 können Kabel oder Schläuche angeordnet sein, die durch vorstehend für das fünfte Ausführungsbeispiel beschriebene Zugentlastungen zwischen den Schenkeln 5, 6 gehalten werden.

Als Zwischenglied 44 wird, wie insbesondere aus den Figuren 36, 38 und 39 hervorgeht, ein zwischen den Schenkeln 5, 6 angeordnetes Auflager 7 für ein unteres Kabel oder einen unteren Schlauch verwendet. Die Schenkel 5, 6 weisen im Bodenbereich ihres Fußes 4 jeweils einen nach innen gerichteten und hakenförmig sich in Höhenrichtung **h** erstreckenden Vorsprung 3 auf. In die durch die hakenförmigen Vorsprünge 45 gebildeten Ausnehmungen 46 greifen sich gegen die Höhenrichtung **h** erstreckende Beine 47 des Auflagers 7 derart ein, dass das Auflager 7 eine Trennung der beiden Schenkel 5, 6 voneinander senkrecht zu ihren Innenseiten verhindert. Ansonsten ist die vorliegende Ausführung analog zu dem vorstehend beschriebenen Ausführungsbeispiel nach den Figuren 24-30 ausgestaltet.

Wie insbesondere aus den Figuren 1, 7, 19, 25, 32 und 37 der vorstehend beschriebenen Ausführungen hervorgeht, weist das Presslager 8 ein in Anlage an eine der Stirnseiten der Schenkel 5, 6 bringbares Widerlager 48 auf. Das Widerlager 40 ist an der Stirnseite der Schenkel 5, 6 angeordnet, die bei Anwendung der Schelle 3 als Zugentlastung gegen die Richtung der auf die Kabel 2 oder Schläuche wirkenden Zugkraft **K** weist. Das zwischen zwei Kabeln 2 oder Schläuchen angeordnete Zwischenlager 23 weist ebenfalls, wie aus den vorstehend genannten Figuren hervorgeht, ein Widerlager an der betreffenden Stirnseite der Schenkel 5, 6 zur Halterung an den Schenkeln bei Zugbeanspruchung der Kabel oder Schläuche auf.

### Bezugszeichenliste

- 1: Zugentlastung
- 2: Kabel
- 3: Schelle
- 4: Fuß
- 5: Schenkel
- 6: Schenkel
- 7: Auflager
- 8: Presslager
- 9: Gegenlager
- 10: Öffnung
- 11: Befestigungsmittel
- 12: Befestigungsmittel
- 13: Pressschraube
- 14: Öffnung
- 15: Vorsprung
- 16: Schlitz
- 17: Teil
- 18: Lagerbuchse
- 19: verschiebbares Teil
- 20: Schlitz
- 21: Eingriffsöffnung
- 22: Schlitz
- 23: Zwischenlager
- 24: Schlitz
- 25: Schlitz
- 26: Stirnseite
- 27: Öffnung
- 28: Schraube
- 29: Außengewinde
- 30: Schlitz
- 31: Schlitz
- 32: Auskragung
- 33: Vertiefung
- 34: Vorsprung
- 35: Vertiefung
- 36: Stirnseite
- 37: Vorsprung
- 38: Vorsprung
- 39: C-Profilschiene
- 40: Hakenende
- 41: Zwischenglied
- 42: abgewinkelter Bereich
- 43: Vertiefung
- 44: Zwischenglied
- 45: Vorsprung
- 46: Ausnehmung
- 47: Bein
- 48: Widerlager

- **K**: Zugkraft
- **h**: Höhenrichtung
- a: Achse

## Patentansprüche

1. Zugentlastung (1) für ein oder mehrere Kabel (2) oder Schläuche gegen eine auf diese wirkende Zugkraft **(K),** umfassend eine Schelle (3) mit einem Fuß (4) und zwei sich vom Fuß (4) aus in einer Höhenrichtung **(h)** erstreckende Schenkel (5, 6), ein im Bereich des Fußes (4) oder in einem an diesen angrenzenden Bereich zwischen den Schenkeln (5, 6) angeordnetes oder anordenbares Auflager (7) für ein Kabel (2) oder einen Schlauch, ein zwischen den Schenkeln (5, 6) angeordnetes oder anordenbares Presslager (8) zur Auflage auf ein Kabel (2) oder einen Schlauch und ein mit dem Presslager (8) verbundenes oder verbindbares, die durch die Presskraft auf das Kabel (2) oder den Schlauch bewirkte Gegenkraft über die Verbindung aufnehmendes und in die Schenkel (5, 6) einleitendes Gegenlager (9), wobei die beiden Schenkel (5, 6) in ihrem vom Fuß (4) weg weisenden Endbereich eine zwischen ihnen liegende Öffnung (10) zum Einlegen eines oder mehrerer Kabel (2) oder Schläuche zwischen die Schenkel (5, 6) gegen die Höhenrichtung **(h)** in Richtung des Fußes (4) aufweisen, wobei das Gegenlager (9) seitliche Befestigungsmittel (11) aufweist, die mit an den Schenkeln (5, 6) ausgebildeten Befestigungsmitteln (12) derart in Eingriff bringbar sind, dass die Position des Gegenlagers (9) in Höhenrichtung **(h)** fixierbar ist, die Befestigungsmittel (11) des Gegenlagers (9) starr und relativ zu diesem unbeweglich angeordnet sind und durch Drehung des Gegenlagers (9) um eine in Höhenrichtung **(h)** verlaufende Achse (a) oder durch Einschieben oder Verschieben des Gegenlagers (9) relativ zu den Schenkeln (5, 6) in einer von der Höhenrichtung **(h)** abweichenden Richtung mit den an den Schenkeln (5, 6) ausgebildeten Befestigungsmitteln (12) zur Fixierung des Gegenlagers (9) in Höhenrichtung **(h)** in Eingriff bringbar sind, als Befestigungsmittel (12) der Schenkel (5, 6) mehrere in Höhenrichtung **(h)** der Schenkel (5, 6) im Abstand voneinander angeordnete Schlitze (16) oder an den Innenseiten der Schenkel (5, 6) angeordnete Vertiefungen vorgesehen sind, so dass das Gegenlager (9) in unterschiedlichen Höhenpositionen an den Schenkeln (5, 6) fixierbar ist, und eine an dem Presslager (8) drehbar um eine in Höhenrichtung **(h)** verlaufende Achse (a) gelagerte oder lagerbare und sich vom Presslager (8) in Höhenrichtung **(h)** der Schenkel (5, 6) erstreckende Pressschraube (13) mit Außengewinde vorgesehen ist, das mit einem im Gegenlager (9) angeordneten Innengewinde zum kontinuierlichen Einstellen des Abstands zwischen dem Gegenlager (9) und dem Presslager (8) zusammenwirkt, **dadurch gekennzeichnet, dass** das Gegenlager (9) mindestens einen, vorzugsweise zwei diametral gegenüberliegende, in Bezug auf die Achse (a) radial angeordnete Vorsprünge (15) aufweist, die durch Drehung des Gegenlagers (9) um die Achse (a) in die Schlitze (16) oder Vertiefungen einbringbar sind, und das Gegenlager (9) drehbar um die Achse (a) an einem unverdrehbar an den Schenkeln (5, 6) angeordneten oder anordenbaren, längs der Schenkel (5, 6) in Höhenrichtung **(h)** verschiebbaren Teil (19) gelagert ist, wobei die Pressschraube (13) und das Gegenlager (9) an der in Höhenrichtung **(h)** weisenden Seite des Teils (19) zwecks Drehung der Pressschraube (13) und des Gegenlagers (9) unabhängig voneinander zugänglich sind

2. Zugentlastung (1) nach Anspruch 1, **dadurch gekennzeichnet, dass** die an den Schenkeln (5, 6) ausgebildeten Schlitze (16; 25) oder Vertiefungen (35) längs der Schenkel (5, 6) senkrecht zu ihrer Höhenrichtung **(h)** verlaufen .

3. Zugentlastung (1) nach Anspruch 1 oder 2, **dadurch gekennzeichnet, dass** das Teil (19) an Seitenbereichen Schlitze (20) aufweist, durch die die Schenkel (5, 6) der Schelle (3) hindurchführbar sind.

4. Zugentlastung (1) nach einem der Ansprüche 1 bis 3, **dadurch gekennzeichnet, dass** die Schenkel (5, 6) im bodenseitigen Bereich des Fußes (4) einstückig miteinander in Gestalt einer starren U-Form verbunden sind.

5. Zugentlastung (1) nach einem der Ansprüche 1 bis 3, **dadurch gekennzeichnet, dass** die Schenkel (4, 5) im Bereich des Fußes (4) hakenförmig mit einem Zwischenglied (41; 44) gegen Trennung voneinander senkrecht zu ihren Innenseiten verbunden sind.

6. Zugentlastung (1) nach einem der Ansprüche 1 bis 5, **dadurch gekennzeichnet, dass** die Schenkel (5, 6) plattenförmig ausgebildet sind und in ihrem gegen die Höhenrichtung **(h)** weisenden Endbereich in den Fuß (4) übergehen.

7. Zugentlastung (1) nach Anspruch 6, **dadurch gekennzeichnet, dass** der Fuß (4) geometrisch an das Innenprofil einer zur Befestigung der Schelle (3) dienenden C-Profilschiene (39) mit verengter Öffnung angepasst ist, so dass die Schelle (3) mit dem Fuß (4) in die C-Profilschiene (39) einschiebbar ist.

8. Zugentlastung (1) nach Anspruch 6, **dadurch gekennzeichnet dass** der Fuß (4) hakenförmig ausgebildet ist und in eine C-Profilschiene in gekippter Stellung der Schelle (3) mit dem Hakenende einführbar ist, so dass beim Aufschwenken der Schelle (3) das Hakenende einen Öffnungsrand der C-Profilschiene untergreift und die Schelle (3) bei Zugbeanspruchung der darin befestigten Kabel (2) oder Schläuche in einer in die Schwenkrichtung weisenden Richtung die Schelle (3) sicher in der C-Profilschiene verankert ist.

## Claims

1. Strain relief cable clamp (1) for one or more cables (2) or hoses against a tensile force **(K)** acting thereon, comprising a clamp (3) with a foot (4) and two legs (5, 6) extending from the foot (4) in a height direction **(h),** a support (7) for a cable (2) or a hose, which support is arranged or can be arranged in the region of the foot (4) or in a region adjacent thereto between the legs (5, 6), a pressing bearing (8) which is arranged or can be arranged between the legs (5, 6) for bearing on a cable (2) or a hose, and a counterbearing (9) which is connected or can be connected to the pressing bearing (8) and receives the counterforce caused by the pressing force on the cable (2) or the hose via the connection and introduces it into the legs (5, 6), wherein the two legs (5, 6) have in their end region pointing away from the foot (4) an opening (10) located between them for inserting one or more cables (2) or hoses between the legs (5, 6) against the height direction **(h)** in the direction of the foot (4), the counter bearing (9) having lateral fastening means (11) which can be brought into engagement with fastening means (12) formed on the legs (5, 6) in such a way that the position of the counter bearing (9) can be fixed in the height direction **(h),** wherein the fastening means (11) of the counter bearing (9) are arranged rigidly and immovably relative thereto and can be brought into engagement with the fastening means (12) formed on the legs (5, 6) for fixing the counter bearing (9) in the height direction (h) by turning the counter bearing (9) about an axis (a) extending in the height direction (h) or by inserting or displacing the counter bearing (9) relative to the legs (5, 6) in a direction deviating from the height direction **(h),** wherein several slots (16) arranged at distance from each other in the height direction **(h)** of the legs (5, 6) or recesses arranged on the inner sides of the legs (5, 6) are provided as fastening means (12) of the legs (5, 6), so that the counter bearing (9) can be fixed in different height positions on the legs (5, 6), and wherein a pressing screw (13) with an external thread is provided which is mounted or can be mounted on the pressing bearing (8) rotatably about an axis (a) extending in the height direction **(h)** and extends from the pressing bearing (8) in the height direction **(h)** of the legs (5, 6), which external thread interacts with an internal thread arranged in the counter bearing (9) for continuously adjusting the distance between the counter bearing (9) and the pressing bearing (8), **characterized in that** the counter bearing (9) has at least one, preferably two diametrically opposite projections (15) which are arranged radially with respect to the axis (a) and which can be introduced into the slots (16) or recesses by rotating the counter bearing (9) about the axis (a), and the counter bearing (9) is mounted rotatably about the axis (a) on a part (19) which is or can be non-rotatably arranged on the legs (5, 6) and which can be displaced along the legs (5, 6) in the height direction (h), wherein the pressing screw (13) and the counter bearing (9) are accessible independently of one another on the side of the part (19) pointing in the height direction **(h)** for the purpose of turning the pressing screw (13) and the counter bearing (9).

2. Strain relief cable clamp (1) according to claim 1, **characterized in that** the slots (16; 25) or recesses (35) formed on the legs (5, 6) extend along the legs (5, 6) perpendicular to their height direction **(h).**

3. Strain relief cable clamp (1) according to claim 1 or 2, **characterized in that** the part (19) has slots (20) on side regions through which the legs (5, 6) of the clamp (3) can be passed.

4. Strain relief cable clamp (1) according to any one of claims 1 to 3, **characterized in that** the legs (5, 6) are integrally connected to each other in the bottom-side region of the foot (4) in the form of a rigid U-shape.

5. Strain relief cable clamp (1) according to any one of claims 1 to 3, **characterized in that** the legs (4, 5) are connected in the region of the foot (4) to an intermediate member (41; 44) in a hook-like manner against separation from each other perpendicular to their inner sides.

6. Strain relief cable clamp (1) according to any one of claims 1 to 5, **characterized in that** the legs (5, 6) are plate-shaped and merge into the foot (4) in their end region pointing towards the vertical direction (h).

7. Strain relief cable clamp (1) according to claim 6, **characterized in that** the foot (4) is geometrically adapted to the inner profile of a C-profile rail (39) with a narrowed opening which serves to fasten the clamp (3), so that the clamp (3) can be inserted into the C-profile rail (39) with the foot (4).

8. Strain relief cable clamp according to claim 6, **characterized in that** the foot (4) is configured in a hook shape and can be inserted with the hook end into a C-profile rail in the tilted position of the clamp (3), so that when the clamp (3) is swung open, the hook end engages under an opening edge of the C-profile rail and the clamp (3) is securely anchored in the C-profile rail when the cables (2) or hoses fastened therein are subjected to tensile stress in a direction pointing in the swing direction.

## Revendications

1. Serre-câble à libération de contrainte (1) pour un ou plusieurs câbles (2) ou tuyaux contre une force de traction **(K)** agissant sur eux, comprenant un collier (3) avec un pied (4) et deux jambes (5, 6) s'étendant à partir du pied (4) dans une direction de hauteur **(h),** un support (7) pour un câble (2) ou un tuyau, lequel support est disposé ou peut être disposé dans la région du pied (4) ou dans une région adjacente à celui-ci entre les jambes (5, 6), un palier de pression (8) qui est disposé ou peut être disposé entre les jambes (5, 6) pour s'appuyer sur un câble (2) ou un tuyau, et un contre-palier (9) qui est relié ou peut être relié au palier de pression (8) et reçoit la contre-force causée par la force de pression sur le câble (2) ou le tuyau via la connexion et l'introduit dans les jambes (5, 6), dans lequel les deux jambes (5, 6) présentent dans leur zone d'extrémité orientée à l'opposé du pied (4) une ouverture (10) située entre elles pour insérer un ou plusieurs câbles (2) ou tuyaux entre les jambes (5, 6) contre la direction de la hauteur **(h)** en direction du pied (4), le contre-palier (9) ayant des moyens de fixation latéraux (11) qui peuvent être mis en contact avec des moyens de fixation (12) formés sur les jambes (5, 6) de manière à ce que la position du contre-palier (9) puisse être fixée dans la direction de la hauteur **(h),** dans lequel les moyens de fixation (11) du contre-palier (9) sont disposés de manière rigide et inamovible par rapport à celui-ci et peuvent être mis en prise avec les moyens de fixation (12) formés sur les jambes (5, 6) pour fixer le contre-palier (9) dans la direction de la hauteur **(h)** en tournant le contre-palier (9) autour d'un axe (a) s'étendant dans la direction de la hauteur **(h)** ou en insérant ou en déplaçant le contre-palier (9) par rapport aux jambes (5, 6) dans une direction s'écartant de la direction de la hauteur **(h)** dans une direction différente de la direction de la hauteur **(h),** dans laquelle plusieurs fentes (16) disposées à distance les unes des autres dans la direction de la hauteur **(h)** des jambes (5, 6) ou des évidements disposés sur les côtés intérieurs des jambes (5, 6) sont prévus comme moyens de fixation (12) des jambes (5, 6), de sorte que le contre-palier (9) peut être fixé dans différentes positions de hauteur sur les jambes (5, 6), et dans lequel une vis de pression (13) avec un filetage extérieur est prévue, qui est montée ou peut être montée sur le palier de pression (8) de manière rotative autour d'un axe (a) s'étendant dans la direction de la hauteur **(h)** et s'étend à partir du palier de pression (8) dans la direction de la hauteur **(h)** des jambes (5, 6), ce filetage extérieur interagissant avec un filetage intérieur disposé dans le contre-palier (9) pour ajuster en continu la distance entre le contre-palier (9) et le palier de pression (8), **caractérisé en ce que** le contre-palier (9) a au moins une, de préférence deux saillies diamétralement opposées (15) qui sont disposées radialement par rapport à l'axe (a) et qui peuvent être introduites dans les fentes (16) ou les évidements en faisant tourner le contre-palier (9) autour de l'axe (a), et le contre-palier (9) est monté de manière rotative autour de l'axe (a) sur une pièce (19) qui est ou peut être disposée de manière non rotative sur les jambes (5, 6) et qui peut être déplacée le long des jambes (5, 6) dans la direction de la hauteur **(h),** la vis de pression (13) et le contre-palier (9) étant accessibles indépendamment l'un de l'autre du côté de la pièce (19) orientée dans la direction de la hauteur **(h)** afin de faire tourner la vis de pression (13) et le contre-palier (9).

2. Serre-câble à libération de contrainte (1) selon la revendication 1, **caractérisé en ce que** les fentes (16; 25) ou les évidements (35) formés sur les jambes (5, 6) s'étendent le long des jambes (5, 6) perpendiculairement à leur direction de la hauteur **(h).**

3. Serre-câble à libération de contrainte (1) selon la revendication 1 ou 2, **caractérisé en ce que** la pièce (19) comporte des fentes (20) sur les parties latérales à travers lesquelles les jambes (5, 6) du collier (3) peuvent être passées.

4. Serre-câble à libération de contrainte (1) selon la revendication 1 ou 3, **caractérisé en ce que** les jambes (5, 6) sont intégralement reliées l'une à l'autre dans la zone latérale inférieure du pied (4) sous la forme d'un U rigide.

5. Serre-câble à libération de contrainte (1) selon l'une des revendications 1 à 3, **caractérisé en ce que** les jambes (4, 5) sont reliées dans la zone du pied (4) à un élément intermédiaire (41; 44) à la manière d'un crochet et ne peuvent être séparées l'une de l'autre perpendiculairement à leurs côtés intérieurs.

6. Serre-câble à libération de contrainte (1) selon l'une des revendications 1 à 5, **caractérisé en ce que** les jambes (5, 6) sont en forme de plaque et se fondent dans le pied (4) dans leur zone d'extrémité orientée vers la direction de la hauteur **(h).**

7. Serre-câble à libération de contrainte (1) selon la revendication 6, **caractérisé en ce que** le pied (4) est géométriquement adapté au profil intérieur d'un rail profilé en C (39) avec une ouverture rétrécie qui sert à fixer le collier (3), de sorte que le collier (3) peut être inséré dans le rail profilé en C (39) avec le pied (4).

8. Serre-câble à libération de contrainte (1) selon la revendication 6, **caractérisé en ce que** le pied (4) est configuré en forme de crochet et peut être inséré avec l'extrémité du crochet dans un rail profilé en C dans la position inclinée du collier (3), de sorte que lorsque le collier (3) est ouvert, l'extrémité du crochet s'engage sous un bord d'ouverture du rail profilé en C et le collier (3) est solidement ancré dans le rail profilé en C lorsque les câbles (2) ou les tuyaux qui y sont fixés sont soumis à une contrainte de traction dans une direction orientée vers la direction de pivotement.
